# EUROPÄISCHE PATENTSCHRIFT

(11) **EP 1 972 595 B1**
(45) Veröffentlichungstag und Bekanntmachung des Hinweises auf die Patenterteilung: **02.10.2013**
(21) Anmeldenummer: 08004110.6
(22) Anmeldetag: 05.03.2008
(51) Int. Cl.: B66C 13/18, B66C 13/40, G01S 5/14, G06F 9/445, G01S 5/00, G07C 5/00, G01S 19/16

(54) **Fahrzeugkran**
Crane vehicle
Grue de véhicule

(30) Priorität: 23.03.2007 DE 102007014114
(43) Veröffentlichungstag der Anmeldung: 24.09.2008
(73) Patentinhaber: Liebherr-Werk Ehingen GmbH, 89584 Ehingen/Donau (DE)
(72) Erfinder: Morath, Erwin, 89584 Lauterach (DE)
(74) Vertreter: Herrmann, Uwe

(56) Entgegenhaltungen:
- US-A1- 2005 262 498

## Beschreibung

Die vorliegende Erfindung betrifft einen Fahrzeugkran.

Bei modernen Kranen spielt die elektronische Steuerung in Form von Hard- und Software eine wesentliche Rolle und gewinnt immer mehr an Bedeutung für den effizienten Einsatz eines Krans. Die Betreiber eines Fahrzeugkrans erwarten sowohl, dass der Kran unter optimalen Einsatzbedingungen arbeiten kann, als auch die Möglichkeit, im Problemfall schnell und effizient Hilfe zur Seite gestellt zu bekommen, um eine etwaige Ausfallzeit des Krans auf ein Minimum zu reduzieren.

Aus dem Stand der Technik ist es bereits bekannt, Fahrzeugkrane mit einer Funkverbindung, beispielsweise mit einer GSM-Schnittstelle, auszurüsten, mit der Daten übertragen, Faxe versandt oder auch Telefonate geführt werden können. Der vorliegenden Erfindung liegt die Aufgabe zugrunde, einen Fahrzeugkran dahingehend weiterzubilden, dass die Mittel zur drahtlosen Datenübertragung genutzt werden, um einen Fahrzeugkran besonders vorteilhaft einsetzen zu können.

US 2005/262498 A1 betrifft ein Verfahren zum drahtlosen Bereitstellen eines Software-Updates auf einen Zielmodul in einer Arbeitsmaschine.

Gemäß einem Aspekt der vorliegenden Erfindung ist der Fahrzeugkran mit Mitteln zum drahtlosen Empfang von den Aufenthaltsort des Krans kennzeichnenden Daten oder mit Mitteln zur Ermittlung von diesen Daten sowie mit Übertragungsmitteln ausgerüstet, die mit diesen Mitteln in Verbindung stehen oder mit diesen verbindbar sind, wobei die Übertragungsmittel derart ausgeführt sind, dass sie die den Aufenthaltsort des Krans kennzeichnenden Daten von dem Kran an einen Empfänger drahtlos übertragen. Der Begriff der "den Aufenthaltsort des Krans kennzeichnenden Daten" ist weit auszulegen und umfasst jede Art von Daten, die als solche den Aufenthaltsort des Krans repräsentieren, wie beispielsweise Koordinaten, sowie auch Daten, die den Aufenthaltsort des Krans mittelbar repräsentieren, wie beispielsweise die von Satelliten empfangenen GPS-Signale, auf deren Grundlage eine Bestimmung des Aufenthaltsortes des Krans vorgenommen wird.

Aufgrund der Tatsache, dass der Kran gemäß diesem Ausführungsbeispiel der Erfindung seinen Aufenthaltsort repräsentierende Daten drahtlos an eine Einheit, beispielsweise an eine vom Kran räumlich entfernte Zentrale übersendet, kann der Kran jederzeit geortet werden. Dies kann zur Überwachung der Kranbewegungen sowie als effizienter Diebstahlschutz genutzt werden.

Die Mittel, mittels derer feststellbar ist, an welchem Ort sich der Kran befindet, können z.B. durch einen GPS-Empfänger gebildet werden. Selbstverständlich sind auch andere Verfahren zur Ermittlung des Aufenthaltsortes denkbar. Möglich ist es beispielsweise, dass der Kran Kennungen einer oder mehrerer Funkzellen eines Mobilfunknetzes an eine Empfangseinheit, beispielsweise an eine Zentrale übersendet, auf deren Grundlage sodann feststellbar ist, in welchem Bereich sich der Kran aktuell befindet.

In weiterer Ausgestaltung der Erfindung ist vorgesehen, dass der Kran einen Speicher aufweist, in dem die den Aufenthaltsort des Krans kennzeichnenden Daten speicherbar bzw. gespeichert sind. Besteht für einen Zeitraum nicht die Möglichkeit der drahtlosen Übertragung von Daten, etwa weil keine Netzabdeckung eines Mobilfunknetzes besteht, können die den Aufenthaltsort des Krans betreffenden Daten, die bei bestehender Verbindung drahtlos übersandt worden wären, im Kran in einem Speicher zumindest solange zwischengespeichert werden, bis wieder die Möglichkeit der drahtlosen Kommunikation besteht.

In weiterer Ausgestaltung der Erfindung ist somit vorgesehen, dass der Kran Mittel zur Bestimmung der Verbindungsqualität bzw. zur Existenz der Übertragungsstrekke zur drahtlosen Übertragung von Daten aufweist, sowie eine Steuereinheit, die derart ausgeführt ist, dass sie die Speicherung der den Aufenthaltsort des Krans kennzeichnenden Daten in dem Speicher veranlasst, wenn die Verbindungsqualität einen Grenzwert unterschreitet oder wenn überhaupt keine Verbindung besteht, und die Übertragung der gespeicherten Daten veranlasst, wenn die Verbindungsqualität einen Grenzwert übersteigt bzw. wieder vorhanden ist. Dadurch ergibt sich der Vorteil, dass die Aufenthaltsdaten des Krans vollständig auch dann vorliegen, wenn sich zwischenzeitlich nicht die Möglichkeit der drahtlosen Datenübertragung ergeben hatte.

Die vorliegende Erfindung betrifft des Weiteren einen Fahrzeugkran mit Mitteln zum drahtlosen Übersenden eines Software-Updatesignals an eine Softwareverwaltungseinheit sowie zum drahtlosen Empfang eines Antwortsignals oder mit Mitteln zur drahtlosen Überprüfen einer Softwareverwaltungseinheit, mit Auswertemitteln zur Auswertung des Antwortsignals oder des Ergebnisses der Überprüfung sowie mit Empfangsmitteln zum drahtlosen Empfang von Software. Wie bereits oben ausgeführt, nimmt die Software einen hohen Stellenwert im Rahmen des effizienten Kranbetriebes ein. In dieser Ausgestaltung der Erfindung steht im Kran stets die aktuelle und somit optimale Software zur Verfügung. Dazu ist vorgesehen, dass der Kran einer Softwareverwaltungseinheit, beispielsweise einem zentralen Server ein Abfragesignal sendet und dass die Softwareverwaltungseinheit sodann ein Antwortsignal an den Kran sendet, aus dem hervorgeht, dass neue Software vorliegt, die heruntergeladen werden kann. Das Abfragesignal kann beispielsweise den Kran kennzeichnende Daten oder auch die aktuelle auf dem Kran befindliche Software kennzeichnende Daten umfassen, damit seitens der Softwareverwaltungseinheit eine Prüfung durchgeführt werden kann, welche Software für den betreffenden Kran geeignet ist bzw. ob der Kran mit der aktuellen Software ausgerüstet ist oder ob ein Update erforderlich ist. Auch ist es denkbar, dass sich der Kran in die Softwareverwaltungseinheit einloggt oder dort eine Überprüfung vornimmt, ob ein Softwareupdate erforderlich ist.

Ist ein Update erforderlich, wird von der Softwareverwaltungseinheit oder von einer anderen geeigneten Stelle die Software drahtlos an den Kran übertragen.

Denkbar ist es, dass der Kran des Weiteren Mittel zum selbstständigen Laden und Installieren der durch die Empfangsmittel empfangenen Software aufweist. Einer Mithilfe des Betreibers des Krans bedarf es in bevorzugter Ausgestaltung der Erfindung nicht. Vielmehr nimmt der Kran die Softwareaktualisierung vorzugsweise selbständig vor.

Gemäß der Erfindung ist vorgesehen, dass der Kran derart ausgeführt ist, dass die drahtlose Übersendung eines Softwareupdatesignals oder die drahtlose Überprüfung in vorgegebenen Zeitintervallen bzw. zu vorgegebenen Zeitpunkten erfolgt. Im Kran kann somit beispielsweise ein Zeitintervall vorgesehen werden. Aufgrund dieses Intervalls meldet sich der Kran automatisch an einer definierten Stelle und prüft auf neue bzw. verfügbare Software. Dabei ist es möglich, dass der Kran Erfassungsmittel aufweist, mittels derer erfaßbar ist, wenn die Zeitintervalle oder die Zeitpunkte nicht eingehalten wurden.

Gemäß der Erfindung ist vorgesehen, dass der Kran Mittel zur Beschränkung oder zur Einstellung des Kranbetriebes aufweist, die mit den Erfassungsmitteln in Verbindung stehen oder verbindbar sind und die derart ausgeführt sind, dass der Kranbetrieb eingestellt oder eingeschränkt wird, wenn seitens der Erfassungsmittel festgestellt wird, dass die Zeitintervalle oder die Zeitpunkte nicht eingehalten wurden. Meldet sich der Kran nicht zur Softinrareaktualisierung kann beispielsweise davon ausgegangen werden, dass eine nicht ordnungsgemäße Benutzung des Krans vorliegt, was dazu führen kann, dass der Kran nur noch eingeschränkt betrieben werden kann oder stillgesetzt wird.

Die vorliegende Erfindung betrifft des Weiteren einen Fahrzeugkran mit Übertragungsmitteln zur drahtlosen Übertragung oder zur Bereitstellung von die Wartung und/oder eine Störung des Krans betreffenden Daten zu deren drahtlosen Abruf sowie mit Mitteln zum drahtlosen Empfang von auf den drahtlos übertragenen Daten basierenden Diagnose- oder Servicedaten.

Denkbar ist beispielsweise, dass für den Fall, dass der Kran eine Störung aufweist, eine drahtlose Verbindung zu einem Servicestützpunkt hergestellt wird. Dort können ein oder mehrere Diagnoseabläufe von fachkundigem Personal gestartet werden, dabei Fehler erkannt werden und gegebenenfalls zusammen mit dem Kunden vor Ort die Arbeitsfähigkeit wieder hergestellt werden. Diese Ausgestaltung der Erfindung bezieht sich nicht nur auf den Fall einer Kranstörung, sondern auch auf den Fall des Service. Denkbar ist beispielsweise, dass Kranbetriebsdaten seitens des Krans bereitgestellt oder übertragen werden und dass auf der Grundlage dieser Daten in einer Servicestelle Serviceintervalle bestimmt und an den Kran gesandt werden.

Somit wird die Verfügbarkeit des Krans für den Kunden gesteigert und Folgekosten eines längeren Kransausfalls werden vermieden.

In weiterer Ausgestaltung der Erfindung ist vorgesehen, dass der Fahrzeugkran mit Mitteln zur optischen Erfassung des Krans, von Teilen des Krans oder zur optischen Erfassung des Kranarbeitsbereiches sowie mit Übertragungsmitteln ausgerüstet ist, mittels derer auf der optischen Erfassung basierende Daten drahtlos an eine vorgegebene Einheit übertragbar sind. Auf diese Weise ist es beispielsweise möglich, eine Lifebeobachtung der Arbeiten in einer vom Kran räumlich entfernten Zentrale durchzuführen und ggf. von dort aus einzugreifen.

In weiterer Ausgestaltung der Erfindung ist vorgesehen, dass der Kran im Sinne einer "Blackbox" ausführte Mittel zur Erfassung und Speicherung von Kranbetriebsdaten aufweist sowie Übertragungsmittel mittels derer die gespeicherten Kranbetriebsdaten (Loggerdaten) drahtlos an eine vorgegebene Stelle übertragbar sind. Auf diese Weise können beispielsweise über Funk Loggerdaten an eine zentrale Einheit übertragen werden. Diese Daten können beispielsweise für Analyse oder Servicezwecke genutzt werden oder in der zentralen Einheit für eine etwaige spätere Verwendung gespeichert werden.

In weiterer Ausgestaltung der Erfindung ist vorgesehen, dass der Fahrzeugkran mit Übertragungsmitteln zur drahtlosen Übertragung eines oder mehrerer Signale sowie mit Prüfmitteln ausgerüstet ist, mittels derer prüfbar ist, ob durch die Übertragungsmittel das oder die Signale abgegeben wurden, wobei die Prüfmittel derart ausgeführt sind, dass der Kranbetrieb für den Fall eingeschränkt oder eingestellt wird, dass seitens der Prüfmittel festgestellt wird, dass das oder die Signale nicht oder nicht zu einem vorgegebenen Zeitpunkt abgegeben wurden. Auf dieser Grundlage kann beispielsweise entschieden werden, den Kran stillzulegen oder den Kranbetrieb zu beschränken, wenn über eine längere Zeitspanne oder zu vorgegebenen Zeitpunkten kein Signal vom Kran abgegeben bzw. von einer zentralen Stelle empfangen wurde.

Denkbar ist, dass dem vorgegebenen Zeitpunkt bzw. dem Ablauf der Zeitspanne und/oder dem Abschalten des Krans oder der Beschränkung des Kranbetriebs eine Vorwarnung / Vorabinformation vorausgehen kann. Somit ist es möglich, dass zwischen dem vorgegebenen Zeitpunkt bzw. dem Ablauf der Zeitspanne und der Einschränkung des Kranbetriebs oder dem Abschalten des Krans oder ähnlicher Maßnahmen eine Vorwarnung / Vorabinformation abgegeben wird und/oder eine bestimmte Zeitspanne verstreicht, sofern der Kran das genannte Signal nicht bzw. nicht fristgerecht abgegeben hat. Der Zeitpunkt, zu dem eine Einschränkung des Kranbetriebes vorgenommen wird oder der Kran abgeschaltet wird, kann somit der letzte Zeitpunkt in einem Zeitraum mit verschiedenen Eskalationsstufen darstellen.

Besonders vorteilhaft ist es, wenn der genannte vorgegebene Zeitpunkt bzw. der Ablauf des Zeitintervalls und/oder die Zeitspanne zwischen dem vorgegebenen Zeitpunkt oder dem Ablauf des Zeitintervalls und der Einschränkung oder der Einstellung des Kranbetriebs oder sonstiger Maßnahmen einstellbar ist. Möglich ist es beispielsweise, dass der Kran in bestimmten, variablen Zeitintervallen oder zu bestimmten, variablen Zeitpunkten die genannten Signale abzugeben hat. Denkbar ist, dass dieser Wert bzw. diese Werte beispielsweise vom Hersteller oder vom Betreiber des Krans einstellbar, d.h. variierbar ist/sind. So kann beispielsweise der Zeitraum bis zum Abschalten des Krans in manchen Fällen kürzer gestaltet werden. Wird der Kran in einer Gegend mit bekannt höherer Diebstahlhäufigkeit betrieben, kann dies für den Betreiber des Krans von Vorteil sein.

Auf diese Weise ist es möglich, die Prüfintervalle oder Prüfzeitpunkte und/oder die Zeitspanne zu variieren, die zwischen einer negativen Prüfung und der Einstellung oder Beschränkung des Kranbetriebes liegt.

Die vorliegende Erfindung betrifft des Weiteren ein Verfahren zur Ausrüstung eines Fahrzeugkrans gemäß einem der Ansprüche 1 oder 2 mit Software, insbesondere mit einem Softwareupdate, wobei der Kran ein Updatesignal an eine Softwareverwaltungseinheit sendet und von dieser ein Antwortsignal empfängt oder wobei der Kran eine drahtlose Überprüfung einer Softwareverwaltungseinheit vornimmt und sodann in Abhängigkeit von dem Antwortsignal oder in Abhängigkeit von der Überprüfung drahtlos Software empfängt. Wird festgestellt, dass ein Softwareupdate nicht erforderlich ist, kann ein Herunterladen eines Softwareupdates selbstverständlich unterbleiben. Wird jedoch festgestellt, dass der Kran noch nicht mit der neuesten Softwarefassung ausgerüstet ist, wird diese drahtlos an den Kran übermittelt. Vorzugsweise ist vorgesehen, dass der Kran sodann die drahtlos empfangene Software selbständig lädt und installiert.

Weitere Einzelheiten und Vorteile der Erfindung werden anhand mehrerer im Folgenden dargestellter Ausführungsbeispiele näher erläutert.

Der Kran gemäß den vorliegenden Ausführungsbeispielen verfügt über Mittel zum Aufbau einer GSM-Verbindung. Statt einer drahtlosen Anbindung per GSM sind selbstverständlich auch andere Mittel denkbar, mittels derer eine drahtlose Kommunikation möglich ist, wie beispielsweise der Einsatz eines W-LAN. Der Kran verfügt über Mittel mittels derer verschlüsselte oder unverschlüsselte Daten drahtlos empfangen und abgesendet werden können.

In einem Ausführungsbeispiel verfügt der Kran über ein GPS-Modul, mittels dessen aufgrund der von Satelliten empfangenen Daten feststellbar ist, an welcher Position sich der Kran befindet. Diese Positionsdaten werden permanent oder in bestimmten Zeitabständen von dem Kran an eine zentrale Stelle, beispielsweise an eine Betriebsüberwachung übersandt, mittels derer die Bewegungen eines oder mehrerer Krane beobachtet wird. Auf diese Weise ist stets bekannt, an welcher Stelle sich der Kran befindet. Dies kann als effizienter Diebstahlschutz genutzt werden.

In einer Ausgestaltung der Erfindung kann in dem Kran ein Zeitintervall vorgesehen sein. Ist dieses Zeitintervall abgelaufen, meldet sich der Kran automatisch an einer definierten Stelle und prüft auf neue verfügbare, d. h. die richtige Software. Dies kann beispielsweise dadurch geschehen, dass der Kran ein Abfragesignal an eine zentrale Softwareverwaltungseinheit schickt und ein Antwortsignal auswertet oder dass der Kran sich in eine Softwareverwaltungseinheit einloggt oder dort auf das Vorliegen neuer Software prüft. Für den Fall, dass zu ladende Software aufgefunden wird, wird diese durch den Kran selbständig geladen und installiert, ohne dass der Kranbetreiber dabei eingreifen müsste. Somit hat der Kunde stets alle neuen Möglichkeiten der Software zur Verfügung und braucht sich um ein Update nicht selbst zu kümmern. Auch hier kann vorgesehen sein, dass davon auszugehen ist, dass eine illegale Benutzung vorliegt, wenn der Kran sich zum Zwecke der Softwareaktualisierung nicht meldet. In diesem Fall kann in dem Kran ein geeignetes Verfahren gestartet werden, was bis zum Stillsetzen des Krans führen kann.

Natürlich kann in diesem Fall der Kran ebenso für den Kunden anschließend wieder frei geschaltet werden.

In einer weiteren Ausgestaltung der Erfindung ist vorgesehen, dass für den Fall, dass der Fahrzeugkran eine Störungsmeldung abgibt, der Kran eine Verbindung zu einem Servicestützpunkt herstellen kann. Seitens des fachkundigen Servicepersonals können sodann alle einschlägigen Diagnoseabläufe bzw. Algorithmen gestartet werden. Dabei kann die Störung identifiziert und eine Problemlösung ermittelt werden. Sodann kann drahtlos oder ggf. mit dem Betreiber zusammen die Arbeitsfähigkeit des Krans wieder hergestellt werden. Zumindest kann dafür gesorgt werden, dass schnellstmöglich eine Behebung bzw. eine Ersatzteilbereitstellung erfolgt. Auf diese Weise wird die Verfügbarkeit des Krans für den Kunden gesteigert und Folgekosten eines Kranausfalls werden vermieden.

Ein weiterer Vorteil besteht darin, dass erforderliche Wartungsarbeiten schon frühzeitig erkannt und vorbereitet werden können. Auch eine außerplanmäßig notwendige vorbeugende Wartung kann beispielsweise auf der Grundlage von kranseitig übermittelten Daten erkannt und vorbereitet werden.

Des Weiteren kann vorgesehen sein, dass die drahtlose Verbindung vom bzw. zum Kran derart ausgestaltet ist, dass Arbeiten des Krans in räumlicher Entfernung zum Kran, beispielsweise in einer Zentrale oder Überwachungsstation live verfolgt werden können und dass gegebenenfalls sogar eingegriffen werden kann. Denkbar ist es beispielsweise, dass Sonderlastfälle beobachtet und ggf. freigegeben werden können. Durch die Möglichkeit der drahtlosen Übermittlung dieser Daten kann somit von einer Überwachungsstation ausgehend auf den Kranbetrieb Einfluss genommen werden.

Da über Funk auch eine Datenübertragung möglich ist, können auch Logger-Daten übertragen werden. Diese Daten können beispielsweise für Analyse oder Servicezwecke genutzt werden.

## Patentansprüche

1. Fahrzeugkran mit Mitteln zum drahtlosen Übersenden eines Software-Updatesignals an eine Softwareverwaltungseinheit sowie zum drahtlosen Empfang eines Antwortsignals oder mit Mitteln zum drahtlosen Überprüfen einer Softwareverwaltungseinheit, mit Auswertemitteln zur Auswertung des Antwortsignals oder des Ergebnisses der Überprüfung sowie mit Empfangsmitteln zum drahtlosen Empfang von Software,
**dadurch gekennzeichnet, dass**
der Kran derart ausgeführt ist, dass die drahtlose Übersendung eines Software-Updatesignals oder die drahtlose Überprüfung der Softwareverwaltungseinheit in vorgegebenen Zeitintervallen oder zu vorgegebenen Zeitpunkten erfolgt,
dass der Kran Erfassungsmittel aufweist, mittels derer erfaßbar ist, wenn die Zeitintervalle oder die Zeitpunkte nicht eingehalten wurden, und dass
der Kran Mittel zur Beschränkung oder zur Einstellung des Kranbetriebes aufweist, die mit den Erfassungsmitteln in Verbindung stehen oder verbindbar sind und die derart ausgeführt sind, dass der Kranbetrieb eingeschränkt oder eingestellt wird, wenn seitens der Erfassungsmittel ermittelt wird, dass die Zeitintervalle oder die Zeitpunkte nicht eingehalten wurden.

2. Fahrzeugkran nach Anspruch 1, **dadurch gekennzeichnet, dass** der Kran des Weiteren Mittel zum selbständigen Laden und Installieren der durch die Empfangsmittel empfangenen Software aufweist.

3. Verfahren zur Ausrüstung eines Fahrzeugkrans gemäß Anspruch 1 oder Anspruch 2 mit Software, insbesondere mit einem Softwareupdate, **dadurch gekennzeichnet, dass** der Kran ein Updatesignal an eine Softwareverwaltungseinheit sendet und von dieser ein Antwortsignal empfängt oder dass der Kran eine drahtlose Überprüfung einer Softwareverwaltungseinheit vornimmt und sodann in Abhängigkeit von dem Anhnrortsignal oder in Abhängigkeit von der Überprüfung drahtlos Software empfängt.

4. Verfahren nach Anspruch 3, **dadurch gekennzeichnet, dass** der Kran die drahtlos empfange Software selbsttätig lädt und installiert.

## Claims

1. A mobile crane having means for the wireless transmission of a software update signal to a software management unit as well as for the wireless reception of a response signal or having means for the wireless checking of a software management unit, having evaluation means for the evaluation of the response signal or of the result of the check as well as having reception means for the wireless reception of software,
**characterized in that**
the crane is designed such that the wireless transmission of a software update signal or the wireless checking of the software management unit takes place at predetermined time intervals or at predetermined points in time,
the crane has detection means by means of which it can be detected when the time intervals or the points in time were not observed, and **in that**
the crane has means for the restriction or for the stopping of the crane operation which are in communication with or can be connected to the detection means and which are designed such that the crane operation is restricted or stopped when it is determined by means of the detection means that the time intervals or the points in time were not observed.

2. A mobile crane in accordance with claim 1, **characterized in that** the crane furthermore has means for the independent loading and installation of the software received by the receiving means.

3. A method for the equipping of a mobile crane in accordance with claim 1 or claim 2 with software, in particular with a software update, **characterized in that** the crane transmits an update signal to a software management unit and receives a response signal from it; or **in that** the crane carries out a wireless check of a software management unit and then receives software in a wireless manner in dependence on the response signal or in dependence on the check.

4. A method in accordance with claim 3, **characterized in that** the crane loads and installs the software received in a wireless manner independently.

## Revendications

1. Grue de véhicule avec des moyens pour la transmission sans fil d'un signal de mise à jour de logiciel à une unité de gestion de logiciel ainsi que pour la réception sans fil d'un signal de réponse ou avec des moyens pour la vérification sans fil d'une unité de gestion de logiciel, avec des moyens d'évaluation pour évaluer le signal de réponse ou le résultat de la vérification ainsi qu'avec des moyens de réception pour la réception sans fil de logiciel,
**caractérisée en ce que**
la grue est exécutée de telle manière que la transmission sans fil d'un signal de mise à jour de logiciel ou la vérification sans fil de l'unité de gestion de logiciel est effectuée à des intervalles de temps prédéterminés ou à des instants prédéterminés,
**en ce que** la grue présente des moyens de détection, au moyen desquels il est possible de détecter quand les intervalles de temps ou les instants n'ont pas été respectés, et
**en ce que** la grue présente des moyens pour la limitation ou l'arrêt du fonctionnement de la grue, qui sont reliés ou peuvent être reliés aux moyens de détection et qui sont exécutés de telle manière que le fonctionnement de la grue est limité ou arrêté quand au niveau des moyens de détection il est déterminé que les intervalles de temps ou les instants n'ont pas été respectés.

2. Grue de véhicule selon la revendication 1, **caractérisée en ce que** la grue présente en outre des moyens pour le chargement et l'installation autonome du logiciel reçu par les moyens de réception.

3. Procédé pour équiper une grue de véhicule selon la revendication 1 ou la revendication 2 d'un logiciel, en particulier d'une mise à jour de logiciel, **caractérisé en ce que** la grue envoie un signal de mise à jour à une unité de gestion de logiciel et reçoit de celle-ci un signal de réponse ou **en ce que** la grue entreprend une vérification sans fil d'une unité de gestion de logiciel et reçoit ensuite sans fil un logiciel en fonction d'un signal de réponse ou en fonction de la vérification.

4. Procédé selon la revendication 3, **caractérisé en ce que** la grue charge et installe de manière automatique le logiciel reçu sans fil.
